# EUROPÄISCHE PATENTANMELDUNG

(11) **EP 1 013 158 A1**
(43) Veröffentlichungstag der Anmeldung: **28.06.2000**
(21) Anmeldenummer: 99116528.3
(22) Anmeldetag: 24.08.1999
(51) Int. Cl.: A01B 33/10

(54) **Zinkenrotor für ein Bodenbearbeitungsgerät**

(30) Priorität: 22.12.1998 DE 29822809 U
(71) Anmelder: RDZ DUTZI GmbH, 76698 Ubstadt-Weiher (DE)
(72) Erfinder: Dutzi, Friedhelm, 76698 Ubstadt-weiher (DE)
(74) Vertreter: Petersen, Frank, Dipl.-Ing.

(57) **Zusammenfassung**

Die Erfindung betrifft einen Zinkrotor für ein Bodenbearbeitungsgerät mit einer im wesentlichen horizontal angeordneten Rotorwelle (1), die mit in Vertikalebenen (16) um die Rotorwellenachse (11) umlaufenden Halterungen (5, 6, 7) für Zinken (8, 9, 10) versehen ist, wobei die Halterungen (5, 6, 7) über Zwischenstücke (2, 3, 4) von der Rotorwelle (1) beabstandet sind, wobei ein Zwischenstück (2, 3, 4) sich nur über ein Teilsegment des von ihm überstrichenen Umlaufkreises erstreckt.

## Beschreibung

Die Erfindung betrifft einen Zinkenrotor für ein Bodenbearbeitungsgerät mit einer im wesentlichen horizontal angeordneten Rotorwelle, die mit in Vertikalebenen um die Rotorwellenachse umlaufenden Halterungen für Zinken versehen ist, wobei die Halterungen über ein Zwischenstück von der Rotorwelle beabstandet sind.

Bei den hier betrachteten Bodenbearbeitungsgeräten handelt es sich insbesondere um Bodenbearbeitungsgeräte, die hinter einem Ackerschlepper angekuppelt sind und auf dem Prinzip der nicht wendenden Bodenbearbeitung beruhen. An ihrem vorderen Ende tragen diese Bodenbearbeitungsgeräte Lockerungsschare, die über die Arbeitsbreite den Boden aufbrechen ohne ihn zu wenden. Hinter diesen Scharen sitzt dann der Zinkenrotor, mit dem Ernterückstände und Gründüngung in den oberen Bodenhorizont eingearbeitet werden und der dabei für den für eine Bandsaat notwendigen Erdstrom sorgt. Eine nachgeschaltete Packerwalze führt dann das Bodenbearbeitungsgerät in einer eingestellten Tiefe und sorgt gleichzeitig für die nötige Rückverfestigung des Bodens.

Bei bisher bekannten Zinkenrotoren, wie sie beispielsweise in der DE-U-295 06 469.2 dargestellt sind, waren die Halterungen für die Zinken direkt an der Rotorwelle angeschweißt. Da die Halterung dort als Blöcke ausgebildet waren, wurde der effektive Durchmesser der Rotorwelle durch diese aufgeschweißten blockartigen Halterungen vergrößert. Dieser effektive Durchmesser kam dabei auf der Unterseite öfter mit dem durch die Zinken verursachten Erdstrom in Verbindung, wobei er wie eine Walze bereits zu einer unterwünschten Rückverdichtung des Bodens führen konnte.

Weiterhin ist aus der US-A-4 326 592 ein Zinkenrotor für ein Bodenbearbeitungsgerät bekannt, bei dem L-förmig abgewinkelte Zinken an einer Scheibe befestigt sind, die auf einer Rotorwelle sitzt, wobei mehrere entsprechende Scheiben in axialer Richtung zueinander beabstandet nebeneinander auf der Welle angeordnet sind.

Bei derartigen nebeneinander angeordneten Scheiben kann sich aber insbesondere auch bei schweren, lehmigen Böden zwischen diesen leicht Erdreich ansammeln, was dann ebenfalls den effektiven Durchmesser der Rotorwelle vergrößern würde und ähnlich einer Walze zu einer unerwünschten Rückverfestigung des durch die Zinken bewirkten, unter der Rotorwelle vorbeiströmenden Erdreiches führen würde.

Aufgabe der vorliegenden Erfindung ist es daher, einen Zinkenrotor anzugeben, der diese beschriebenen Nachteile nicht aufweist sondern einen durch die Zinken verursachten, ungestörten Erdstrom gewährleistet.

Diese Aufgabe wird erfindungsgemäß dadurch gelöst, daß das Zwischenstück, mit dem die Halterung von der Rotorwelle beabstandet ist, sich nur über ein Teilsegment des von ihm überstrichenen Umlaufkreises erstreckt.

Der Vorteil der Erfindung liegt darin, daß sich zwischen den in Axialrichtung der Rotorwelle benachbarten Zwischenstücken keine um die Rotorwelle umlaufenden Hohlräume ergeben, in denen sich Erdreich festsetzen und verklemmen kann, das dann walzenartig eine Rückverdichtung des durch die Zinken verursachten Erdstromes bewirkt.

Außerdem wird durch die Verwendung des Zwischenstückes zwischen Halterung und Rotorwelle erreicht, daß die Halterung aus dem Oberflächenbereich des Erdstromes herausgenommen wird, der besonders empfindlich ist für eine unerwünschte Rückverdichtung durch eine direkt an der Rotorwelle befestigte Halterung. Vielmehr wird die Halterung in tiefere Bereiche verlegt, so daß sie dichter an der das Erdreich aufbrechenden Zinkenspitze anzuordnen ist. Dadurch wird die Halterung selbst noch durch das Erdreich geschleppt und unterstützt die Bildung des Erdstromes, kann ihn aber nicht in der oben beschriebenen Weise verdichten.

Vorteilhafterweise sind zwei in Axialrichtung nebeneinander angeordnete Zwischenstücke in ihrer Position auf der Rotorwelle soweit um einen Winkel in Rotationsrichtung zueinander versetzt, daß sich zwischen ihnen keine in Axialrichtung durch sie begrenzten Räume bilden. Damit wird verhindert, daß sich zwischen zwei benachbarten Zwischenstücken Brücken bilden durch sich zwischen den Zwischenstücken verklemmendes und stauendes Erdreich, das wie oben beschrieben zu Rückverdichtungen und Störungen des durch die Zinken erzeugten Erdstromes führt.

Bei entsprechender Wahl des Winkelversatzes ist auch zu erreichen, daß die Zinken auf schraubengangförmig um die Rotorwelle verlaufenden Linien angeordnet sind, so daß bei Rotation der Welle kontinuierlich Zinken in den oberen Bodenhorizont eintreten. Dies führt zu einer gleichmäßigen Belastung der Rotorwelle und des ihr vorgeschalteten Getriebes und Motors.

Das Zwischenstück ist in axialer Erstreckung schmaler als die Halterung für den Zinken, so daß es den an ihm vorbeilaufenden Erdstrom möglichst wenig beeinflußt. Indem es dabei in radialer Richtung im wesentlichen mittig zu der Halterung angeordnet ist, wird erreicht, daß auf es nicht kontinuierlich Torsionsmomente aufgebracht werden durch über die Halterung exzentrisch an ihm angreifende Kräfte.

Indem dabei der Zinken, der in die Halterung eingesetzt ist und wenigstens so breit wie diese ist, sich beidseits der Ebene erstreckt, die mittig durch das Zwischenstück und die Halterung verläuft, werden auch die auf die Halterung wirkenden Kräfte möglichst gleichmäßig eingeleitet, wobei die insgesamt geringste Belastung eintritt, wenn der Zinken symmetrisch zu dieser Ebene ist.

Für eine einfache Montage und Demontage des Zinkens an der Halterung weist die Halterung eine Buchse auf, an der ein Abschnitt einen unrunden Querschnitt hat, so daß sich der Zinken nicht verdreht. Hierfür sind insbesondere halbrunde Abschnitte geeignet, die am Schaft eines einzusteckenden Zinkens leicht durch eine Anfräsung ein passendes Gegenstück erhalten können.

Bei einem bevorzugten Ausführungsbeispiel ist sichergestellt, daß die Halterung und das Zwischenstück bei der Rotation des Zinkenrotors im wesentlichen hinter einem Radialstrahl von der Wellenachse zur Zinkenspitze liegen, wodurch erreicht wird, daß diese nicht durch von der Zinkenspitze noch nicht aufgebrochenes Erdreich streichen müssen.

Weitere Vorteile und Merkmale der Erfindung ergeben sich aus der nachfolgenden Beschreibung eines Ausführungsbeispiels. Dabei zeigt
- Figur 1: den Schnitt durch einen Zinkenrotor in einer Vertikalebene;
- Figur 2: die Aufsicht auf einen Zinkenrotor.

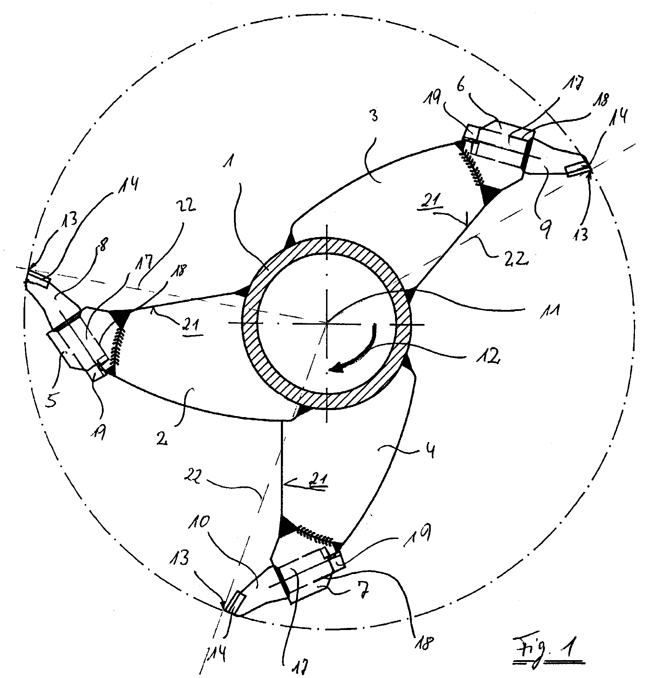

Figur 1 zeigt einen Abschnitt eines Zinkenrotors für ein Bodenbearbeitungsgerät in der Seitenansicht. Dieser Zinkenrotor weist eine im wesentlichen horizontal angeordnete Rotorwelle 1 auf, die im hier dargestellten Beispiel als Rohr ausgebildet ist. Auf dieser Rotorwelle sind über angeschweißte Zwischenstücke 2, 3, 4 Halterungen 5, 6, 7 befestigt, in denen Zinken 8, 9,10 stecken. Bei einer Drehung der Rotorwelle 1 um die Rotorwellenachse 11 laufen die Halterungen über die Zwischenstücke mit den Zinken in Vertikalebenen 16 um, wobei die Umlaufrichtung der Richtung des Pfeiles 12 entspricht. Dabei treten die Zinken 8, 9, 10 mit ihren Zinkenspitzen 13 in das mit dem Zinkenrotor zu bearbeitende Erdreich ein und brechen dieses auf. Dabei sind die Zinken 8, 9, 10 an ihren Zinkenspitzen 13 durch Hartmetallbesatz 14 vor übermässigem Verschleiß geschützt.

Die Zwischenstücke 2, 3, 4 überdecken jeweils nur ein kleines Segment der insgesamt von ihnen überstrichenen Umlaufkreise, so daß sich zwischen benachbarten Zwischenstücken 2, 3 oder 3, 4 kein Erdmaterial festsetzen kann. Das verhindert, daß der Zinkenrotor quasi zusetzt und wie eine Walze fungiert.

Im dargestellten Beispiel ist das überdeckte Segment an der Welle 1 etwa ¼ des Umfanges und nimmt in Radialrichtung nach außen kontinuierlich ab und wird nach außen schmaler.

Die jeweils in Richtung der Rotorwellenachse 11 benachbart zueinander angeordneten Zwischenstücke 2, 3 bzw. 3, 4 sind jeweils um einen Winkel von etwa 135° zueinander versetzt, so daß in Richtung der Rotorwellenachse 11 kein seitlich von ihnen begrenzter Raum existiert. Aufgrund des Winkels von 135° sind jeweils nur jeder neunte Zinken parallel zueinander ausgerichtet, wodurch derart breite Abstände zwischen parallel ausgerichteten Zwischenstücken entstehen, daß sich in ihnen keine Brücken aus sich festsetzendem Erdmaterial bilden können.

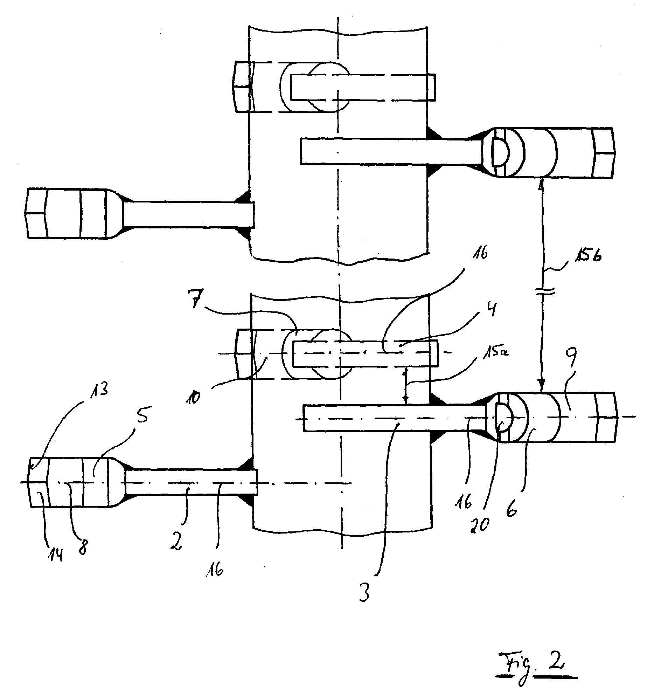

Dies ist beispielsweise in Figur 2 zu erkennen, wo man erkennt, daß der Abstand 15a zwischen zwei benachbarten Zwischenstücken um ein vielfaches geringer ist als der Abstand 15b zwischen zwei parallel zueinander ausgerichteten Zinken.

In der in der Figur 2 dargestellten Aufsicht auf eine Rotorwelle ist auch zu erkennen, daß die Zwischenstücke 2, 3, 4 parallel zur Rotorwellenachse 11 schmaler sind als die an ihnen angebrachten Halterungen 5, 6, 7 und die in diesen steckenden Zinken 8, 9, 10. Dadurch wird gewährleistet, daß die Zwischenstücke 2, 3, 4 im Strömungsschatten der rotierenden Zinken durch das von den Zinken aufgebrochene Erdreich geführt werden und somit selbst keinen erhöhten Strömungswiderstand finden.

Es ist auch zu erkennen, daß die Zwischenstücke in radialer Richtung im wesentlichen mittig hinter den Halterungen 5, 6, 7 angeordnet sind, also mit diesen auf gemeinsamen Mittelebenen 16 liegen, so daß auf die Halterungen wirkende Kräfte gut in die Zwischenstücke eingeleitet werden können. Damit die auf die Halterungen wirkenden Kräfte aus dem Zinken ebenfalls nicht zu unerwünschten Querkräften und Momenten führen, sind auch die Zinken 8, 9, 10 symmetrisch zu diesen Ebenen 16 angeordnet. Dabei kann auch darauf hingewiesen werden, daß die Zinken 8, 9, 10 ebenso breit sind wie ihre Halterungen 5, 6, 7, um diese vor einem abrassiven Verschleiß zu bewahren.

Die Zinken 8, 9, 10 stecken jeweils über Zapfen 17 in entsprechenden Buchsen 18 der Halterungen 5, 6, 7. Dabei enden diese Buchsen 18 in einem Abschnitt 19, der einen unrunden, nämlich halbrunden Querschnitt 20 aufweist. Dadurch sind die Zinken 8, 9, 10 verdrehfest in den Halterungen 5, 6, 7 gelagert.

Die Halterungen 5, 6, 7 und die Vorderkante 21 der Zwischenstücke 2, 3, 4 liegen im wesentlichen hinter einem Radialstrahl 22 von der Rotorwellenachse 11 zu den Zinkenspitzen 13. Auch hierdurch wird gewährleistet, daß die Halterungen 5, 6, 7 und die entsprechenden Zwischenstücke 2, 3, 4 nur in ein bereits von den Zinken 8, 9, 10 aufgebrochenes Erdreich eintreten und hier selbst keine Arbeit mehr leisten müssen.

## Patentansprüche

1. Zinkenrotor für ein Bodenbearbeitungsgerät mit einer im wesentlichen horizontal angeordneten Rotorwelle (1), die mit in Vertikalebenen (16) um die Rotorwellenachse (11) umlaufenden Halterungen (5, 6, 7) für Zinken (8, 9, 10) versehen ist, wobei die Halterungen (5, 6, 7) über Zwischenstücke (2, 3, 4) von der Rotorwelle (1) beabstandet sind,
dadurch gekennzeichnet,
daß ein Zwischenstück (2, 3, 4) sich nur über ein Teilsegment des von ihm überstrichenen Umlaufkreises erstreckt.

2. Zinkenrotor gemäß Anspruch 1,
dadurch gekennzeichnet,
daß zwei in Axialrichtung nebeneinander angeordnete Zwischenstücke (2, 3; 3, 4) um einen Winkel zueinander versetzt sind, um zwischen ihnen keinen in Axialrichtung durch sie begrenzten Raum zu schaffen.

3. Zinkrenrotor gemäß Anspruch 1,
dadurch gekennzeichnet,
daß das Zwischenstück (2, 3, 4) in axialer Erstreckung schmaler ist als die Halterung (5, 6, 7) und in radialer Richtung im wesentlichen mittig in einer Ebene (16) mit dieser angeordnet ist.

4. Zinkenrotor gemäß Anspruch 3,
dadurch gekennzeichnet,
daß der Zinken (8, 9, 10) wenigstens so breit ist wie die Halterung (5, 6, 7) und sich beidseits der Ebene (16) erstreckt, die mittig durch Zwischenstücke (2, 3, 4) und Halterung (5, 6, 7) verläuft.

5. Zinkenrotor gemäß Anspruch 4,
dadurch gekennzeichnet,
daß sich der Zinken (8, 9, 10) symmetrisch zu der Ebene (16) erstreckt.

6. Zinkenrotor gemäß Anspruch 1,
dadurch gekennzeichnet,
daß die Halterung (5, 6, 7) eine Buchse (18) aufweist mit einem Abschnitt (19), da einen unrunden Querschnitt (20) aufweist.

7. Zinkenrotor gemäß Anspruch 1,
dadurch gekennzeichnet,
daß die Halterungen (5, 6, 7) und die Zwischenstücke (2, 3, 4) bei der Rotation im wesentlichen hinter einem Radialstrahl (22) von der Wellenachse (11) zur Zinkenspitze (13) liegen.
